# EUROPEAN PATENT SPECIFICATION

(11) **EP 2 335 544 B1**
(45) Date of publication and mention of the grant of the patent: **13.02.2013**
(21) Application number: 10195169.7
(22) Date of filing: 15.12.2010
(51) Int. Cl.: A47L 9/20, A47L 9/12, A47L 9/14, A47L 5/36, B01D 46/00

(54) **Filter for a sucking apparatus**
Filter für einen Staubsauger
Filtre pour un aspirateur

(30) Priority: 16.12.2009 IT MO20090293
(43) Date of publication of application: 22.06.2011
(73) Proprietor: Aertecnica S.P.A., 47521 Cesena (FC) (IT)
(72) Inventor: Marchi, Marco, 47522 Cesena (FC) (IT)
(74) Representative: Crugnola, Pietro

(56) References cited:
- WO-A1-2007/031497
- DE-C- 894 306
- GB-A- 2 388 307
- US-A1- 2006 137 301

## Description

The present invention relates to a filter for a sucking apparatus, for example a vacuum cleaner, provided with a self-cleaning system.

Sucking apparatuses are known from the prior art that comprise a container in which a collecting chamber is defined for the sucked material. The collecting chamber has an inlet opening at which a flexible pipe is fixed that is used for sucking. The container further houses a motorized suction device that is arranged above the collecting chamber and communicates with the collecting chamber through a sucking opening to generate a vacuum inside the collecting chamber.

A filter is arranged in the collecting chamber, which filter prevents the material sucked into the collecting chamber being able to pass through the sucking opening and thus being returned to the environment from the sucking device. Normally, the filter is mounted in a fixed position inside the collecting chamber between the inlet opening and the suction opening.

After a certain number of hours of operation, the filter tends to get clogged, because of the solid sucked material that is retained by the filter, which increases the resistance of the filter to the passage of air, with a consequent decrease in sucking power and thus of the efficiency of the sucking.

In order to avoid or at least limit clogging of the filter, filter-cleaning systems have been proposed.

For example, it is known to use an electric actuator that periodically "shakes" the filter; the filter subjected to this "shaking" releases the material located thereupon and drops the material inside the collecting chamber.

Typically, the electric actuator is mechanically connected to the filter, rotates an eccentric mass and is driven for short periods of time at preset intervals of time.

Using an electric actuator is expensive (also because of the presence of additional electric cabling), requires control electronics to drive the electric actuator for short periods at preset intervals of time, and causes operating problems in the event of a wet or humid environment (for example when the vacuum cleaner is used to suck water or wet materials).

A filter for a sucking apparatus is further known from WO 2007/031497 that is provided with a device for cleaning the filter that comprises an actuator driven by the air sucked from the sucking apparatus, an eccentric mass and a spring connected to the eccentric mass. The spring is loaded by the actuator and releases the accumulated mechanical energy at preset intervals of time, rotating the eccentric mass, which causes the filter support to be shaken, thus causing the material collected by the filter to fall into the collecting chamber.

The device disclosed in WO 2007/031497 has rather a complex and costly construction, further, it operates intermittently at preset intervals of time, which may be insufficient to ensure effective cleaning of the filter.

The object of the present invention is to provide a filter for a sucking apparatus provided with a filter-cleaning system that is reliable and is of simple and cheap construction.

The aforesaid object is achieved with a filter for a sucking apparatus according to claim 1.

Owing to the invention, a filter is provided for a sucking apparatus provided with a device for cleaning the filter that is driven by the air that is sucked by the sucking apparatus, the cleaning device enabling the filter to be cleaned continuously and being of simple and cheap construction.

The invention can be understood and implemented better from the description that follows, which illustrates by way of non-limiting example, an embodiment of the invention with reference to the attached drawings, in which:

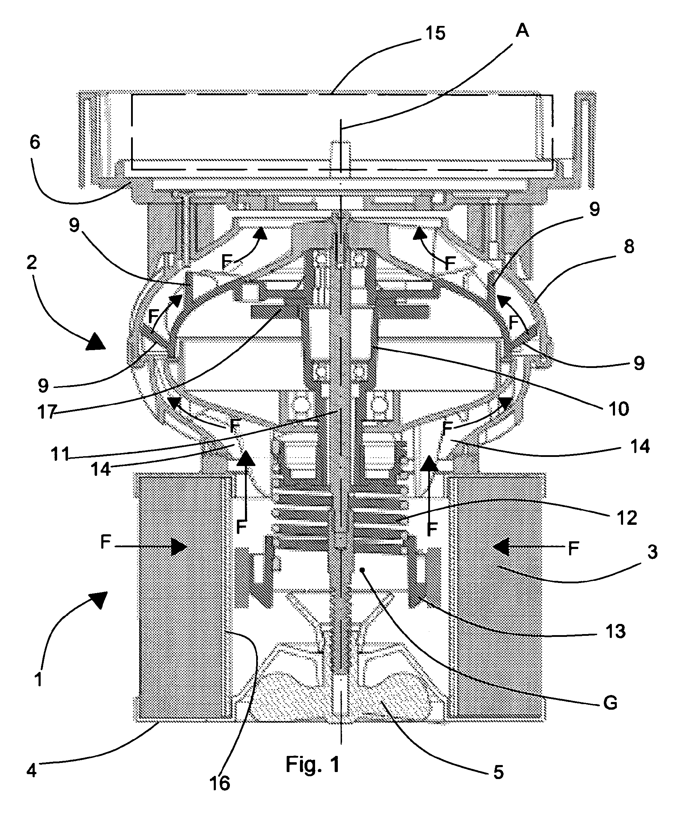

Figure 1 is a section view of a filter according to the invention, with the corresponding cleaning device.

In Figure 1 there is illustrated a filter 1 for a sucking apparatus, associated with a cleaning device 2 for cleaning the filter 1.

The filter 1 comprises a filtering element 3 of annular shape that is inserted into a supporting and containing element 4, provided with a fixing element 5 by means of which the filter 1 can be fixed to the inside of the sucking apparatus.

The filter 1 is associated with a cleaning device 2 that is fixed to a supporting element 6 placed inside the sucking apparatus.

The cleaning device 2 comprises a casing 8 inside which an impeller 9 is arranged that is provided with blading and with a shaft 10 that is rotatingly supported by an impeller 9.

The shaft 10 is a hollow shaft inside which a pivot 11 is arranged that protrudes below from the hollow shaft 10 and to which is fixable, for example via a screw coupling, the fixing element 5 of the filter 1.

To the lower end of the hollow shaft 10 an elastic element 12, for example a coil spring, is connected to which a beating element 13 is fixed, which is intended to come into contact with an internal wall 16 of the supporting and containing element 4 to cause vibration of the filter 1, such as to cause the solid material retained by the filtering element 3 to become detached.

The casing 7 is provided with channels 14 that convey the air, sucked by a suction device 15 of the sucking apparatus, to the impeller 9 to rotate the impeller 9. The arrows F in Figure 1 show the path of the air through the filtering element 3 and the cleaning device 2.

The shaft 10 of the impeller 9 rotates the elastic element 12 which, through the effect of said rotation, rotates around the rotation axis A of the shaft 10, causing a corresponding oscillation of the beating element 13 which, through the effect of said oscillation, goes to knock against a wall 16 of the supporting and containing element 4 of the filter 1, causing a vibration of the filtering element 3, which causes the solid material retained by the filtering element 3, to become detached, dropping said solid material into a collecting chamber, which is not shown, which is located below the filter 1. The frequency with which the beating element 13 goes to knock against the wall 16 of the supporting and containing element 4 depends on the rotation speed of the impeller 9, which in turn depends on the flow rate of air sucked by the suction device 15. The cleaning device 2 thus regulates itself on the basis of the flow rate of air sucked by the suction device 15, without additional regulating systems for regulating the cleaning device 2 being necessary.

In order to facilitate the oscillation of the elastic element 12 and of the beating element 13 with respect to the axis A of the shaft 10, it is advantageous for the beating element 13 to have a centre of gravity that is eccentric with respect to the rotation axis A of the shaft 10.

Further, it is advantageous for the shaft 10 to be associated with a mass 17 having the function of a flywheel, to cushion the variations in the rotation speed of the shaft 10 that are due to variations in the airflow sucked by the sucking device 15, such as to regulate the operation of the cleaning device 2 and ensure, for example, that it continues to operate even if the airflow is interrupted for short intervals of time. The cleaning device 2 according to the invention has the notable advantage of being driven by the air sucked by the suction device 15 and of not thus requiring separate sources of energy to be driven.

Further, the cleaning device 2 operates without interruption for as long as the suction device 15 operates and there is an airflow through the device. The efficiency of the cleaning device depends on the flow rate of air sucked by the suction device 15, increasing as said flow rate increases, because, as already said, the frequency with which the beating element 13 goes to knock against the wall 16 of the supporting and containing element 4 depends on the rotation speed of the impeller 9, increasing as the rotation speed of the impeller 9 increases. As also the quantity of sucked solid substances sucked over the unit of time, with the same percentage of solid substances found in the sucked air, is proportional to the flow rate of the sucked air, the efficiency of the cleaning device adapts automatically to the quantity of sucked solid substances, increasing as the quantity of sucked solid substances increases, in such a manner as always to achieve the best filter cleaning conditions.

## Claims

1. Filter (1) for a sucking apparatus comprising a filtering element (3), a supporting and containing element (4) into which is inserted said filtering element (3), a filter (1) cleaning device (2), said cleaning device (2) comprising an impeller (9) rotated around a rotation axis (A) by a flow of air sucked by a sucking device (15) of said sucking apparatus, **characterised in that** said impeller (9) rotates a shaft (10) having an axis substantially coinciding with said rotation axis (A), said shaft (10) being connected at an end with an elastic element (12) to which a beating element (13) is fixed that is suitable for interacting with a surface (16) of said container (4) to cause a vibration of the filter (1).

2. Filter (1) according to claim 1, wherein said elastic element is a coil spring (12) a first free end of which is fixed to said shaft (10), said beating element (13) being fixed to a second end of said coil spring (12) opposite said first end.

3. Filter (1) according to claim 1, or 2, wherein said beating element (13) has a centre of gravity (G) that is eccentric with respect to said rotation axis (A).

4. Filter (1) according to any preceding claim, wherein said impeller (9) is provided with a blading (9) that is suitable for interacting with said flow of air.

5. Filter (1) according to any preceding claim, wherein said shaft (10) is a hollow shaft inside which a pivot (11) is arranged to an end of which said supporting and containing element (4) is fixable by a fixing element (5).

6. Filter (1) according to any preceding claim, wherein to said shaft (10) a body (17) is fixed that acts as a flywheel.

## Patentansprüche

1. Filter (1) für eine Saugvorrichtung mit einem Filterelement (3), einem Stütz- und Behälterelement (4), in das das Filterelement (3) eingesetzt ist, einer Filter (1)-Reinigungseinrichtung (2), wobei die Reinigungseinrichtung (2) ein Laufrad (9) aufweist, das um eine Rotationsachse (A) durch einen Luftstrom, der von einer Saugeinrichtung (15) der Saugvorrichtung angesaugt ist, rotiert wird, **dadurch gekennzeichnet, dass** das Laufrad (9) eine Welle (10) rotiert, die eine Achse aufweist, die im Wesentlichen mit der Rotationsachse (A) zusammenfällt, wobei die Welle (10) an einem Ende mit einem elastischen Element (12) verbunden ist, an dem ein Schlagelement (13) befestigt ist, das dazu geeignet ist, mit einer Oberfläche (16) des Behälters (4) zu interagieren, um eine Vibration des Filters (1) zu bewirken.

2. Filter (1) nach Anspruch 1, wobei das elastische Element eine Schraubenfeder (12) ist, von der ein erstes freies Ende an der Welle (10) befestigt ist, wobei das Schlagelement (13) an einem zweiten Ende der Schraubenfeder (12) entgegengesetzt dem ersten Ende befestigt ist.

3. Filter (1) nach Anspruch 1 oder 2, wobei das Schlagelement (13) einen Schwerpunkt (G) aufweist, der in Bezug auf die Rotationsachse (A) exzentrisch ist.

4. Filter (1) nach einem der voranstehenden Ansprüche, wobei das Laufrad (9) mit einer Schaufelung (9) versehen ist, die geeignet zum Interagieren mit dem Luftstrom ist.

5. Filter (1) nach einem der voranstehenden Ansprüche, wobei die Welle (10) eine Hohlwelle ist, innerhalb der ein Zapfen (11) angeordnet ist, an dessen einem Ende das Stütz- und Behälterelement (4) mittels eines Befestigungselements (5) befestigbar ist.

6. Filter (1) nach einem der voranstehenden Ansprüche, wobei an der Welle (10) ein Körper (17) befestigt ist, der als ein Schwungrad agiert.

## Revendications

1. Filtre (1) pour un appareil d'aspiration comprenant un élément filtrant (3), un élément de support et d'enceinte (4) dans lequel est inséré ledit élément filtrant (3), un dispositif (2) de nettoyage du filtre (1), ledit dispositif (2) de nettoyage comprenant une roue (9) entraînée en rotation autour d'un axe de rotation (A) par un flux d'air aspiré par un dispositif d'aspiration (15) dudit appareil d'aspiration, ***caractérisé en ce que*** ladite roue (9) fait tourner un arbre (10) ayant un axe coïncidant essentiellement avec ledit axe de rotation (A), ledit arbre (10) étant raccordé à une extrémité à un élément élastique (12) auquel est fixé un élément batteur (13) qui est apte à interagir avec une surface (16) dudit contenant (4) pour provoquer une vibration du filtre (1).

2. Filtre (1) selon la revendication 1, dans lequel ledit élément élastique est un ressort hélicoïdal (12) dont une première extrémité libre est fixée audit arbre (10), ledit élément batteur (13) étant fixé à une seconde extrémité dudit ressort hélicoïdal (12) opposée à ladite première extrémité.

3. Filtre (1) selon la revendication 1 ou 2, dans lequel ledit élément batteur (13) possède un centre de gravité (G) qui est excentré par rapport audit axe de rotation (A).

4. Filtre (1) selon l'une quelconque des revendications précédentes, dans lequel ladite roue (9) est pourvue d'un aubage (9) qui est apte à interagir avec ledit flux d'air.

5. Filtre (1) selon l'une quelconque des revendications précédentes, dans lequel ledit arbre (10) est un arbre creux à l'intérieur duquel est disposé un pivot (11) à une extrémité duquel peut être fixé ledit élément de support et d'enceinte (4) au moyen d'un élément de fixation (5).

6. Filtre (1) selon l'une quelconque des revendications précédentes, dans lequel audit arbre (10) est fixé un corps (17) qui agit comme un volant d'inertie.
